# EUROPEAN PATENT APPLICATION

(11) **EP 1 149 848 A1**
(43) Date of publication of application: **31.10.2001**
(21) Application number: 00201941.2
(22) Date of filing: 31.05.2000
(51) Int. Cl.: C08F 8/30, C08K 5/34, C08G 63/91, C09D 167/02, C09D 5/03

(54) **Powder paint composition**

(30) Priority: 28.04.2000 EP 00201533
(71) Applicant: DSM N.V., 6411 TE Heerlen (NL)
(72) Inventor: Loontjens, Jacobus Antonius, 6231 KK Meerssen (NL); Plum, Bartolomeus Johannes Margretha, 6235 AJ Meerssen (NL); Rietberg, Johan, 8042 NR Zwolle (NL)
(74) Representative: Mooij, Johannes Jacobus

(57) **Abstract**

A powder paint composition comprising:
a polyester a crosslinker and a catalyst, the polyester being based on carboxylic acid and polyalcohol units, wherein at least 75 mol% of the carboxylic acid units are isophtalic acid units, characterized in that the crosslinker is a carbonylbislactamate and the catalyst is an acid, a base, or a salt

The polyester may comprise 100 mol% of isophtalic acid units.

The powder coatings made with the composition of the invention show an improved combination of weathering characteristics and mechanical properties.

## Description

The invention relates to a powder paint composition comprising a polyester, a crosslinker and a catalyst, the polyester being based on carboxylic acid andalcohol units, wherein at least 75 mol% of the carboxylic acid units are isophtalic acid units. In particular the invention is related to a composition which results after curing in an outdoor (super)durable powder coating.

Thermosetting powder paint compositions for outdoor applications predominantly contain curable polyester resins which are carboxyl- or hydroxyl-functional to ensure a crosslinking reaction. Suitable curing agents are for example blocked isocyanates for example caprolactam blocked isophorone diisocyanate in combination with hydroxyl functional polyesters and triglycidylisocyanurate in combination with carboxyl functional polyesters. A wide range of polyesters allows a combination of useful properties such as tunable reactivity, color stability, appearance, corrosion resistance and weathering performance. The outdoor segment may be subdivided in a durable part being of polyesters comprising about 10-30% isophtalic acid units and 70-90% terephtalic acid units and a superdurable part comprising 100% isophtalic acid units, wherein "durable" must be understood as weather or UV-resistant.

However, a further improvement of the powder paint compositions having good weathering characteristics is necessary because compositions comprising a polyester comprising 100 % isophtalic acid units and blocked isocyanates result in products which are too brittle.

It is the aim of the present invention to provide a powder paint composition which has good flow properties and which, after curing, results in a powder coating having an excellent combination of weathering performance, flexibility, and impact resistance.

This aim is achieved in that the crosslinker is a carbonylbislactamate (CBY, wherein Y is a lactamate) with the general formula: 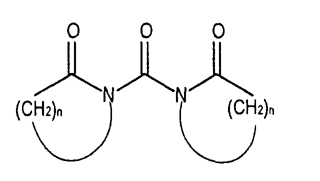 wherein n is an integer from 3 to 15 and the catalyst being an acid, a base or a salt. Preferably the carbonylbislacamate is carbonylbiscaprolactamate, with n = 5.

The powder paint composition according to the invention yields coatings showing good UV-resistance in combination with a good flexibility and good mechanical properties such as for example a good impact resistance. The combination of the superior weathering characteristics and good impact resistance is very surprising.

These characteristics may be achieved after a curing time between for example 1 and 15 minutes at a temperature between for example 135°C and 250°C.

Preferably the polyester comprises at least 90 mol.% of isophtalic acid units. More preferably the polyester comprises 100 mol.% isopthalic acid units.

A suitable target range for the hydroxyl number of the polyester is between for example 20 and 150 mg KOH/g resin, the acid number may be lower than 25, and the glass transition temperature ranges between 25 and 100 degrees celcius. The molar ratio of the hydroxyl functional groups of the polymer and the lactamate groups of the crosslinker may be between for example 2:1 and 1:2 and preferably between 1,2 : 1 and 1: 1,5.

Polyesters are generally based on aliphatic polyalcohols and polycarboxylic acids. In case the acid units are not 100% isophtalic acid units the polyester may comprise units of for example terephthalic acid, 2,6-naphthalene dicarboxylic acid and 4,4-oxybisbenzoic acid.
Other suitable aromatic cycloaliphatic and/or acyclic polycarboxylic acids useful herein include, for example, 3,6-dichloro phthalic acid, tetrachloro phthalic acid, tetrahydro phthalic acid, hexahydro terephthalic acid, hexachloro endomethylene tetrahydro phthalic acid, phthalic acid, azelaic acid, sebacic acid, decane dicarboxylic acid, adipic acid, succinic acid and maleic acid. These other carboxylic acids can be used in amounts of up to for example 25 mol% of the total amount of carboxylic acids. These acids may be used as such, or, in so far as available at their anhydrides, acid chlorides or lower alkyl esters. Small amounts of trifunctional acids for example trimelittic acid may be applied to obtain branched polyesters.

Hydroxy carboxylic acids and/or optionally lactones can also be used, such as, for example, 12-hydroxy stearic acid, hydroxy pivalic acid and ε-caprolactone. Monocarboxylic acids, such as, for example, benzoic acid, tert.-butyl benzoic acid, hexahydro benzoic acid and saturated aliphatic monocarboxylic acids, may, if desired, be used in minor amounts.

Useful polyalcohols, in particular diols, reactable with the carboxylic acids to obtain the polyester include aliphatic diols such as, for example, ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-bis-(4-hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, butyethylpropane diol and ethylmethylpropane diol.

Small amounts, such as less than for example about 20 wt.% and preferably less than 15 wt.%, of trifunctional alcohols may be used in order to obtain branched polyesters. Examples of usefull polyols are glycerol, hexanetriol, trimethylol ethane, trimethylol propane and tris-(2-hydroxyethyl)-isocyanurate.

Tetrafunctional monomers generally are not preferred, because these may cause too much branching and gelling, although minute quantities can be used. Examples of useful polyfunctional alcohols and acids are sorbitol, pentaerithritol and pyromellitic acid. However, in order to synthesise branched polyesters, trifunctional monomers are preferred.

The polyesters are prepared according to conventional procedures by esterification or transesterification, optionally in the presence of customary esterification catalysts such as, for instance, dibutyltin oxide or tetrabutyl titanate. Preparation conditions and the COOH/OH ratio can be selected so as to obtain end products that have an acid number and/or a hydroxyl number within the target range of values.

The powder paint composition according to the invention comprises an acid or a base as a catalyst.

Acids and salts that are suitable as a catalyst for the preparation of a polymer in the presence of CBY are LiX, BX₃, MgX₂, BiX₃, SnX₄, SbX₅, FeX₃, GeX₄, GaX₃, HgX₂, ZnX₂, AlX₃, TiX₄, MnX₂, ZrX₄, R₄NX, R₄PX, HX, where X = I, Br, Cl, F, OR and R = alkyl or aryl. Acids such as H₂SO₄, HNO₃, HX, H₃PO₄, H₃PO₃, RH₂PO₂, RH₂PO₃, R[(CO)OH]ₙ, where n = 1 - 6, Sb₂O₃ and As₂O₃ may also be used. Preferably the acid is tetrabutyl titanate.

Bases that are suitable as a catalyst for the preparation of a polymer in the presence of CBY are M(OH)ₙ, (RO)ₙM (M = alkali or earth alkali, R = alkyl with C₁ - C₂₀ or aryl), NRₙH₄₋ₙOH (R = alkyl with C₁ - C₂₀ or aryl), cyclic amines such as diazobicyclo[2,2,2]octane (DABCO), dimethylaminopyridine (DMAP) and morfoline.

The preparation of thermosetting powder coatings in general and the chemical reactions for curing powder paints to form cured coatings are described by Misev in Powder Coatings, Chemistry and Technology (1991, John Wiley) on pp. 42-54, p. 148 and pp. 224-226. The usually applied isocyanate / hydroxyl curing reaction is described at pages 56-68. For the crosslinker used in the composition of the invention the curing conditions are basically the same as for powder paint compositions based on blocked isocyanates.

If so desired, the usual additives can be added to the composition according to the invention, such as for example pigments, fillers, degassing agents, and stabilizers. Suitable pigments are for example inorganic pigments, such as for example titanium dioxide, zinc sulphide, iron oxide and chromium oxide, and also organic pigments such as for example azo compounds. Suitable fillers are for example metal oxides, silicates, carbonates and sulphates.

Primary and/or secondary antioxidants, UV stabilizers such as quinones, either or not sterically hindered phenolic compounds, phosphonites, phosphites, thioethers and HALS compounds (hindered amine light stabilizers) can for example be used as stabilizers.

Examples of degassing agents are benzoin and cyclohexane dimethanol bisbenzoate. The flow agents include for example polyalkylacrylates, fluorohydrocarbons and silicone fluids. Other suitable additives are for example additives for improving tribocharging, such as sterically hindered tertiary amines that are described in EP-B-371528.

Powder paints according to the invention can be applied in the usual manner, for example by electrostatically spraying the powder onto an earthed substrate and curing the coating by exposing it to heat at a suitable temperature for a sufficient length of time. The applied powder can for example be heated in a gas oven, an electric oven or with the aid of infrared radiation.

Thermosetting powder paint compositions intended for industrial applications are described in a general sense in Powder Coatings, Chemistry and Technology, Misev, pages 141-173 (1991).

Compositions according to the present invention can be used on, for example, metal, wooden and plastic substrates. The compositions according to the invention are also suitable for use in the automotive industry for coating parts and accessories.

The type of non-isophtalic acid units and polyalcohols to be used to prepare the polyester and the curing conditions can be chosen to depend on the desired use.

The systems according to the invention can be used in pigmented an in unpigmented compositions.

If so desired, additives such as dispersing agents, flow-promoting agents and defoaming agents can be added to the powder paint composition according to the invention.

The inventionn will be elucidated below on the basis of the following examples.

### Example I

### Preparation of a powder paint binder composition and powder coating

A polyester resin comprising 100% isophtalic acid units (Uralac P1580™ of DSM Resins), CBC, tetrabutyl titanate, flow benzoin were mixed in an extruder at 100°C. The extrudate was cooled, ground and sieved, and the sieve fraction smaller than 90 micrometers was used as powder coating. The powder coating was sprayed electrostatically onto aluminium panels. The panels sprayed with powder coating were cured in a furnace at 200°C for 30 minutes.

### Comparative Example A

Example 1 was repeated with the exeption that the crosslinker was replaced by Vestagon B1530™ being trimerized isophoron diisocyanate blocked with caprolactam.

**Table 1**

| | **I** | **A** |
|---|---|---|
| **Uralac P1580** | 200 | 160 |
| **Vestagon B1530** | | 40 |
| **CBC** | 36 | |
| **Kronos 2160** | 100 | 100 |
| **Resiflow PV5** | 3.0 | 3 |
| **Benzoin** | 0.8 | 1.5 |
| **Tetrabutyl titanate** | 2.0 | |

### Test results:

| **Appearance, 50 µm** | **Moderate** | **Moderate** |
|---|---|---|
| **Reversed impact,** ¹⁾ **50 µm, 60ip, after 1 day** | 190 | Unsufficient |
| Acetone-resistance ²⁾ | >100 | >100 |
| Quv-B ³⁾ 50% retention at 60° gloss (hours) | 800 | 800 |

| | | |
|---|---|---|
| ¹⁾ The mechanical properties were determined using the "reverse impact test" in accordance with ASTM-2794/69. | | |
| ²⁾ Acetone resistance determined with acetone double rubs test | | |
| ³⁾ Weather resistance test according to ASTM G 53-88. | | |

These experiments show that the binder composition according to the invention results in an improved combination of weathering characteristics and mechanical properties.

## Claims

1. A powder paint composition comprising:
a polyester a crosslinker and a catalyst, the polyester being based on carboxylic acid and polyalcohol units, wherein at least 75 mol% of the carboxylic acid units are isophtalic acid units, **characterized in that** the crosslinker is a carbonylbislactamate according to the following formula: 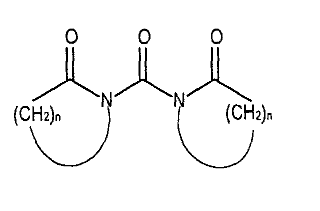 with n is 3 to 15, and the catalyst is an acid, a base, or a salt.

2. A composition according to claim 1, wherein n is 5.

3. A thermosetting powder paint composition according to any one of claims 1-2 **characterised in that** the the polyester comprises at least 90 mol% of isophtalic acid units.

4. A thermosetting paint composition according to Claim 3 **characterised in that** the polyester comprises 100 mol% of isophtalic acid units.

5. A powder coating obtained by curing of a powder paint composition according to anyone of Claims 1-4.

6. A wholly or partly coated substrate, **characterized in that** as coating use is made of a powder coating according to Claim 5.
